# EUROPÄISCHE PATENTSCHRIFT

(11) **EP 0 645 704 B1**
(45) Veröffentlichungstag und Bekanntmachung des Hinweises auf die Patenterteilung: **26.11.1997**
(21) Anmeldenummer: 94114830.6
(22) Anmeldetag: 20.09.1994
(51) Int. Cl.: G06F 11/00

(54) **Tracer-System zur Fehleranalyse in laufenden Realzeitsystemen**
Tracer system for fault analysis in running real-time systems
Système de traçage pour analyse de faute dans un système évoluant en temps réel

(30) Priorität: 28.09.1993 DE 4332993
(43) Veröffentlichungstag der Anmeldung: 29.03.1995
(73) Patentinhaber: SIEMENS AKTIENGESELLSCHAFT, 80333 München (DE)
(72) Erfinder: Kleber, Ulrich, D-80689 München (DE); Keller, Hans-Jörg, Dipl.-Inform., D-85521 Ottobrunn (DE)

(56) Entgegenhaltungen:
- IBM TECHNICAL DISCLOSURE BULLETIN, Bd.31, Nr.8, Januar 1989, NEW YORK US Seiten 450 - 452 'Method for recording program execution'

## Beschreibung

Aus der Entwicklung von immer komplexer werdenden Realzeit-Systemen, z. B. Vermittlungssytemen, ist die Forderung nach entsprechenden Test- und Fehleranalysemöglichkeiten erwachsen. So gibt es bereits eine Vielzahl von Fehleranalysesystemen, die eine Fehlerlokalisierung in derart komplexen Systemen erleichtern und mit deren Hilfe umfangreiche Fehleranalysevorgänge durchgeführt und aufgezeichnet werden können. Ein Beispiel für derartige Test- und Fehleranalysesysteme sind die sogenannten Tracer-Systeme.

Das Aktivieren solcher Tracer-Systeme kann Einflüsse auf das Realzeitverhalten des gesamten Realzeitsystems haben. Diese Einflüsse entstehen dadurch, daß das Tracer-System zusätzliche Aufgaben im Programmablauf durchführen muß und können das Realzeitsystem derart belasten, daß die Realzeit-Anforderungen nicht mehr eingehalten werden können, bzw. das System in einen Überlastzustand geht.

Das genannte Überlast-Problem wird bisher durch ein Überlast-Abwehrsystem innerhalb des Realzeitsystems begrenzt, das die Anzahl der Aufträge beschränkt, die das Realzeitsystem noch annimmt und dadurch einen Gesamtausfall verhindert.

Der Erfindung liegt die Aufgabe zugrunde, zu verhindern, daß das Tracer-System negative Auswirkungen auf das Realzeitverhalten des Realzeitsystems haben kann.

Diese Aufgabe wird durch die Merkmale des Anspruchs 1 gelöst.

Da das erfindungsgemäße Tracer-System die durch das Tracer-System bedingte dynamische Belastung des Realzeitsystems selbst überwacht und sich selbst in Abhängigkeit von dieser Überwachung deaktivieren kann, ist bei dem erfindungsgemäßen Tracer-System sichergestellt, daß es keine negativen Auswirkungen auf das Realzeitverhalten des Realzeitsystems haben kann.

Weitere Ausführungsformen der Erfindung sind durch die Ansprüche 2 bis 7 angegeben.

Anspruch 2 betrifft eine Ausgestaltung der Messung der dynamischen Belastung des Realzeitsystems durch das Tracer-System.

Eine weitere Ausführungsform nach Anspruch 3 ermöglicht es, daß sich das Tracer-System bei Überlast selbst deaktivieren kann, auch wenn die durch das Tracer-System bedingte dynamische Belastung den vorgegebenen Schwellwert bzw. die vorgegebenen Schwellwerte noch nicht überschreitet.

Eine weitere Ausführungsform der Erfindung nach Anspruch 4 ermöglicht es, daß die Überlaststufe vom Bediener verändert werden kann. Dadurch wird eine Fehleranalyse durch das Tracer-System unter jeder Überlaststufe ermöglicht.

Eine weitere Ausführungsform der Erfindung nach Anspruch 5 besitzt einen ähnlichen, jedoch noch stärkeren Effekt wie die Ausführungsform nach Anspruch 4, da es sich um ein unbedingtes Ausschalten handelt.

Eine weitere Ausführungsform der Erfindung nach Anspruch 6 hat insbesondere den Vorteil, daß das Tracer-System keine besonderen hardwaretechnischen Voraussetzungen an das Realzeitsystem stellt. Das erfindungsgemäße Überwachungsmittel zur dynamischen Selbstkontrolle des Tracer-Systems ist insbesondere bei einem softwaremäßigen Tracer-System besonders wichtig, da in diesem Fall jede Aktivität des Tracer-Systems eine dynamische Belastung für das Realzeitsystem bedeutet.

Eine weitere Ausführungsform der Erfindung nach Anspruch 7 verhindert, daß die Deaktivierung eines softwaremäßigen Tracer-Systems das Realzeitsystem zu sehr belasten kann.

Figur 1 zeigt den Ablauf eines Trace-Verfahrens anhand der einzelnen Software-Mittel eines Software-Tracer-Systems.

Figur 2 zeigt die Funktion des Aktivierungsmittels des Tracer-Systems.

Figur 3 zeigt die Funktion des erfindungsgemäßen Überwachungsmittels des Tracer-Systems.

Figur 4 zeigt die Funktion des Ablaufmittels zur Steuerung des Ablaufs des Trace-Vorgangs.

Die grundlegende Idee der Erfindung ist es, ein Tracer-Systems durch ein Überwachungsmittel zu erweiteren, das die dynamische Belastung des Realzeitsystems durch das Tracer-System selbst ermittelt und das Tracer-System deaktiviert, wenn die dynamische Belastung bestimmte Schwellwerte überschreitet.

Das erfindungsgemäße Überwachungsmittel zählt hierzu bei jedem Eingriff des Tracer-Systems in das Realzeitsystem zwei globale Zähler weiter. Einer der Zähler mißt dabei die Anzahl der Trace-Punkte, die während einer bestimmten Meßzeitspannne getroffen werden, während der andere Zähler die Aktivitäten des Tracer-Systems an den einzelnen Trace-Punkten bewertet. Diese Bewertung kann sich nach der Anzahl der gesammelten Daten richten oder direkt verschiedene feste Werte für bestimmte Aktivitäten des Tracer-Systems beinhalten. In bestimmten Meßzeitintervallen werden die beiden Zähler gegen Maximalwerte geprüft und zurückgesetzt. Stellt das erfindungsgemäße Überwachungsmittel anhand der beiden Zähler oder anhand einer Schnittstelle zum Überlastabwehrsystem des Realzeitsystems fest, daß ein Fortsetzen des Trace-Vorgangs den Systembetrieb gefährden würde, so deaktiviert das Überwachungsmittel das Tracer-System. Wenn dieses Deaktivieren das Realzeitverhalten des Realzeitsystems ebenfalls negativ beeinflußt, so wird die Deaktivierung Schritt für Schritt vorgenommen, ohne zu viel Zeit an einem Stück zu belegen.

Das erfindungsgemäße Überwachungsmittel kann vom Bediener ausgeschaltet werden, wenn eine Fehleranalyse unter Überlastbedingungen erforderlich ist. Dieses Ausschalten kann vom Bediener auf bestimmte Überlaststufen beschränkt werden.

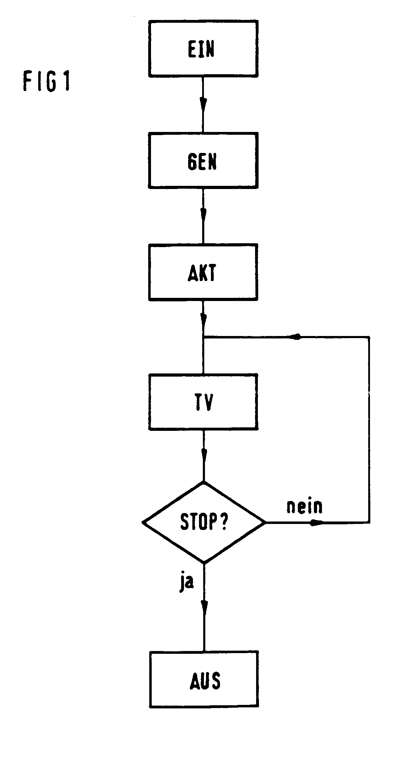

Figur 1 zeigt den Ablauf eines Trace-Verfahrens anhand der einzelnen Software-Mittel eines Software-Tracer-Systems.

In einem ersten Verfahrensschritt empfängt ein Eingabemittel (EIN) vom Bediener des Tracer-Systems Definitionen für die einzelnen Trace-Punkte. Dabei werden als Trace-Punkte entweder Adressen im Programmspeicher (Ersetzen der Originalbefehle durch Sonden) oder vom Tracer-System zu überwachende Speicherbereiche durch Beschreiben spezieller Hardware-Register festgelegt. Des weiteren wird dabei festgelegt, welche Daten beim Erreichen eines jeweiligen Trace-Punktes kopiert werden sollen. Weiterhin werden Sonderfunktionen festgelegt, die beim Erreichen eines Trace-Punktes jedesmal ausgeführt werden sollen. Bei den genannten Sonderfunktionen kann es sich z. B. um zusätzliche Bedingungen handeln, die beim Erreichen eines Trace-Punktes erfüllt sein müssen (z. B. Stop-Bedingungen oder Events für andere Tools, wie z. B. den Betriebssystem-Tracer, der Betriebssystemanrufe mitprotokolliert oder andere Spezial-Tracer, wie z. B. den Call-Tracer, der den Nachrichtenfluß innerhalb der vermittlungstechnischen Software mitprotokolliert).

Die vom Bediener in dem ersten Verfahrensschritt festgelegten Definitionen werden schließlich abschließend mit einem Namen zusammengefaßt und unter diesem Namen in einem Trace-Zwischenspeicher im Datenspeichersegment des Tracer-Systems zwischengespeichert.

Alle im ersten Verfahrensschritt getätigten Eingaben können symbolisch erfolgen, d. h. in einer Syntax, die einem Source-Code ähnlich ist.

In einem zweiten Verfahrensschritt werden durch ein Generierungsmittel (GEN) anhand der Definitionen im ersten Verfahrensschritt spezielle Programmstücke generiert, die im Programmspeicher abgelegt werden und an den zugehörigen Trace-Punkten später aufgerufen werden. Diese Programmstücke werden im folgenden als "Trace-Routinen" bezeichnet. Zur Erzeugung dieser Trace-Routinen enthält das Software-Tracer-System einen kleinen Compiler.

Die Trace-Routinen werden nach ihrer Erzeugung durch den Compiler im Programmspeicher abgelegt, damit sie aufgerufen werden können, sobald ein Trace-Punkt erreicht wird. Die Trace-Routine führt dann selbst alle Trace-Funktionen aus, bzw. generiert die Events. Danach kann das getestete Programm mit Hilfe einer Code-Simulation, die weiter unten erläutert wird, fortgesetzt werden.

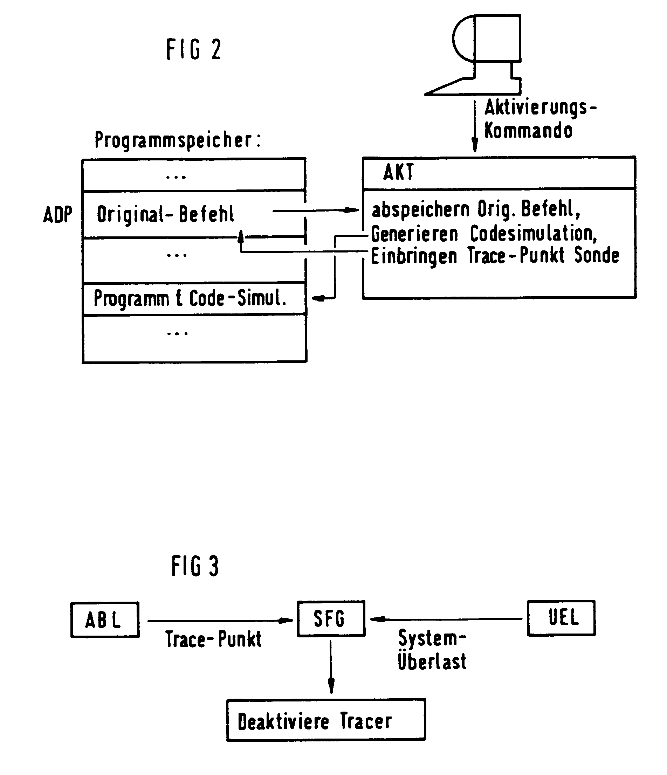

In einem dritten Verfahrensschritt wird der eigentliche Trace-Vorgang durch den Bediener mit Hilfe eines Aktivierungsmittels AKT aktiviert. Figur 2 zeigt die Wirkungsweisedes Aktivierungsmittels AKT.

Zur Ausführung der Aktivierung speichert das Aktivierungsmittel zunächst den an einer Trace-Punkt-Adresse ADP befindlichen Original-Befehl in dem Trace-Zwischenspeicher des Tracer-Systems ab und bringt sodann die Sonde für den Trace-Punkt in den Code ein, bzw. aktiviert spezielle Debug-Register des Microprozessors. Der Trace-Vorgang kann auch durch Zeitgeber oder andere Events aktiviert werden. Ein Trace-Vorgang TV besteht darin, daß das zu testende Programm jeweils bis zu einem Trace-Punkt ausgeführt wird, an diesem sodann die für diesen Trace-Punkt erzeugte Trace-Routine ausgeführt wird und schließlich die Ausführung des zu testenden Programms fortgesetzt wird.

Das Aktivierungsmittel beinhaltet außer den Mitteln zum Aktivieren des Trace-Vorgangs auch Mittel zum Deaktivieren des Trace-Vorgangs durch den Bediener. Von der Deaktivierung durch den Bediener ist die Deaktivierung durch Stopbedingungen oder Events für andere Tools (siehe Verzweigungsblock "STOP?" in Figur 1) zu unterscheiden.

In einem vierten Verfahrensschritt kann der Bediener nach der Deaktivierung des Trace-Vorgangs die durch den Trace-Vorgang gesammelten Daten von einem Ausgabemittel (AUS) getrennt anfordern. Aufgrund einer solchen Anforderung werden die angeforderten Daten aus dem Trace-Zwischenspeicher gelesen und gemäß der Definition der Trace-Punkte symbolisch ausgegeben.

Während des Trace-Vorgangs wird das System nur minimal dynamisch beeinflußt, da der Aufruf der Trace-Routinen dynamisch optimiert wird und das Tracer-System alle Möglichkeiten des Microprozessors ausnutzt, um das getestete Programm möglichst schnell wieder fortzusetzen.

Die symbolische Ein- und Ausgabe mit Hilfe der Eingabe- und Ausgabemittel ist durch Zugriff auf die beim Compilieren erstellten Symboltabellen realisiert.

Beim Einbringen der Sonden für die Trace-Punkte muß das Aktivierungsmittel AKT den Maschinencode des getesteten Programms verändern, indem es einen Originalbefehl mit Hilfe eines Trap- oder Interrupt-Befehls mit der entsprechenden Sonde des jeweiligen Trace-Punktes überschreibt. Wird nun während des Ablaufs des zu testenden Programms ein Trace-Punkt erreicht, so verzweigt der Prozessor zunächst zum Tracer-System. Dieses sucht sodann die zugehörige Trace-Routine und führt sie aus. Danach wird mit Hilfe eines kleinen Programms zur Code-Simulation gewährleistet, daß das zu testende Programm sofort fortgesetzt wird, und zwar mit dem überschriebenen Originalbefehl.

Zur Realisierung einer herkömmlichen Fortsetzung des getesteten Programms müßte ein herkömmliches Tracer-System - wie es jeder konventionelle Debuger tut - zunächst den durch die Trace-Punkt-Sonde veränderten Originalcode wiederherstellen, den überschriebenen Originalbefehl ausführen, erneut zum Aktivierungsmittel des Tracer-Systems verzweigen, um die Sonde wieder einzubringen, und kann erst dann das getestete Programm hinter der Sonde fortsetzen.

Bei der Realisierung, die das Ausführungsbeispiel des erfindungsgemäßen Tracer-Systems verwendet und die im folgenden als Code-Simulation bezeichnet wird, werden die beiden Schreibvorgänge im Programmspeicher (Originalcode wiederherstellen, Sonde erneut einbringen) mit der zugehörigen Schreibschutz- und Cache-Behandlung und die zweite Programmunterbrechung (erneute Verzweigung zum Aktivierungsmittel) vermieden und dadurch erheblich Zeit eingespart.

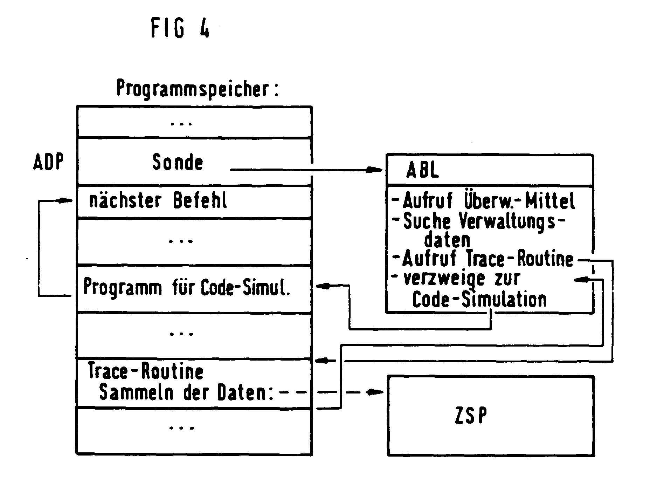

Die Code-Simulation besteht darin, daß bereits nach dem Abspeichern des Original-Befehls durch das Aktivierungsmittel mit Hilfe eines Fortsetzungsmittels (im Aktivierungsmittel enthalten) ein kleines Programm (Zusatzcode) erzeugt wird, (siehe Figur 2), das zur Simulation dieses Originalbefehls dient, das die Rücksprungadresse zum getesteten Programm miteinschließt und das nach Ablauf der Trace-Routine gestartet wird (siehe Figur 4).

Eine Code-Simulation ist besonders bei solchen Prozessoren vorteilhaft, die nur wenige Befehle kennen, die von ihrer Adresse im Arbeitsspeicher, bzw. dem aktuellen Wert des Programmzählers abhängen (z. B. der Befehl "Springe 20 Bytes zurück"). Dies ist z. B. bei RISC-Prozessoren der Fall.

Weiterhin kann bei den meisten RISC-Prozessoren dadurch Zeit eingespart werden, daß in den TRAP-Befehl, der für die Trace-Punkt-Sonde verwendet wird, bereits eine Trace-Punkt-Nummer eincodiert wird, die ein Suchen der Trace-Routine bzw. der für den Trace-Vorgang nötigen Verwaltungsdaten des Tracer Systems erleichtert.

Figur 3 zeigt die Funktion eines erfindungsgemäßen Überwachungsmittels SFG.

Während eines Trace-Vorgangs überwacht das Tracer-System sich selbst, indem das Überwachungsmittel SFG ermittelt, wie stark das Tracer-System das laufende Realzeitsystem belastet, d. h. wieviel Rechenzeit es belegt. Werden dabei bestimmte Belastungsschwellwerte überschritten, so schaltet sich das erfindungsgemäße Tracer-System mit Hilfe des Überwachungsmittels selbständig aus.

Das Überwachungsmittel SFG wird an jedem Trace-Punkt durch ein Ablaufmittel ABL zur Steuerung des Ablaufs des Trace-Vorgangs aufgerufen und zählt dabei immer zwei globale Zähler weiter. Der eine Zähler zählt dabei wieviele Trace-Punkte getroffen werden, während der andere Zähler die Anzahl der gesammelten Daten zählt. In bestimmten Zeitintervallen werden die beiden Zähler gegen Maximalwerte geprüft und zurückgesetzt. Stellt das Überwachungsmittel anhand der beiden Zähler oder anhand einer Überlast-Information über eine Schnittstelle zu einem Überlastabwehrsystem UEL des Realzeitsystems fest, daß ein Fortsetzen des Trace-Vorgangs den Systembetrieb gefährden würde, so veranlaßt das Überwachungsmittel selbsttätig über das Aktivierungsmittel die Deaktivierung aller Trace-Punkte Schritt für Schritt, ohne für diese Deaktivierung zu viel Zeit an einem Stück zu belegen.

Das Überwachungsmittel SFG zur dynamischen Selbstkontrolle kann vom Bediener ausgeschaltet werden, wenn eine Fehleranalyse unter Überlastbedingungen erforderlich ist. Dieses Ausschalten kann auf bestimmte Überlast-Stufen beschränkt werden.

Figur 4 zeigt die Wirkungsweise des bereits erwähnten Ablaufmittels ABL zur Steuerung des Ablaufs des Trace-Vorgangs. Das Ablaufmittel wird an jedem Trace-Punkt aufgerufen und veranlaßt daraufhin verschiedene Aktionen. Zunächst ruft es das erfindungsgemäße Überwachungsmittel SFG auf. Sodann sucht es die für einen Trace-Punkt zur Steuerung des weiteren Ablaufs benötigten Verwaltungsdaten. Daraufhin erfolgt der Aufruf der Trace-Routine, die die an einem Trace-Punkt gewünschten Daten sammelt und anschließend in einen Trace-Zwischenspeicher ZSP abspeichert. Schließlich ruft das Ablaufmittel das Programm zur Code-Simulation auf, das nach seinem Abschluß selbständig zu dem hinter dem Trace-Punkt liegenden nächsten Befehl des zu testenden Programms springt.

## Patentansprüche

1. Tracer-System zur Fehleranalyse von Programmen in laufenden Realzeitsystemen, mit
einem Überwachungsmittel (SFG), das die durch das Tracer-System bedingte dynamische Belastung des Realzeitsystems ermittelt und das Tracer-System deaktiviert, falls diese dynamische Belastung wenigstens einen bestimmten Schwellwert überschreitet.

2. Tracer-System nach Anspruch 1,
**dadurch gekennzeichnet**,
daß das Überwachungsmittel (SFG) die durch das Tracer System bedingte dynamische Belastung des Realzeitsystems ermittelt, indem es die Häufigkeit der angetroffenen Trace-Punkte sowie die durchschnittliche Aktivität pro Trace-Punkt oder Aktivität innerhalb eines bestimmten (Meß-) Zeitraums mißt.

3. Tracer-System nach Anspruch 1 oder 2,
**dadurch gekennzeichnet**,
daß
a) das Überwachungsmittel (SFG) eine Schnittstelle zu einer Systemkomponente des Realzeitsystems, z.B. Überlastabwehrsystem (UEL) besitzt, über die es im Überlastfall eine Information über die vorliegende Überlaststufe erhält,
b) das Überwachungsmittel das Tracer-System deaktiviert, wenn eine bestimmte Überlaststufe erreicht worden ist.

4. Tracer-System nach Anspruch 3,
**dadurch gekennzeichnet**,
daß die bestimmte Überlaststufe vom Bediener oder anderen Teilen des Systems verändert werden kann.

5. Tracer-System nach einem der Ansprüche 1 bis 4,
**dadurch gekennzeichnet**,
daß das Überwachungsmittel vom Bediener oder anderen Teilen des Systems unbedingt ausgeschaltet werden kann.

6. Tracer-System nach einem der Ansprüche 1 bis 5,
**dadurch gekennzeichnet**,
daß das Tracer-System als Software-System im Realzeitsystem oder teilweise auf externen Systemkomponenten implementiert ist.

7. Tracer-System nach Anspruch 3 oder 4,
**dadurch gekennzeichnet**,
daß
a) das Tracer-System als Software-System im Realzeitsystem oder teilweise auf externen Systemkomponenten mitimplementiert ist,
b) das Überwachungsmittel die Deaktivierung des Tracer-Systems bei Überlast Schritt für Schritt vornimmt.

## Claims

1. Tracer system for fault analysis of programs in running real-time systems, having
a monitoring means (SFG) which determines the dynamic load on the real-time system caused by the tracer system and deactivates the tracer system if this dynamic load exceeds at least one specific threshold value.

2. Tracer system according to Claim 1, characterized in that the monitoring means (SFG) determines the dynamic load on the real-time system caused by the tracer system by measuring the frequency of the arriving trace points and the average activity per trace point or activity within a specific (measurement) time period.

3. Tracer system according to Claim 1 or 2, characterized in that
a) the monitoring means (SFG) has an interface to a system component of the real-time system, for example an overload protection system (UEL), via which, in the event of an overload, it receives information about the prevailing overload level,
b) the monitoring means deactivates the tracer system when a specific overload level has been reached.

4. Tracer system according to Claim 3, characterized in that the specific over load level can be varied by the operator or by other parts of the system.

5. Tracer system according to one of Claims 1 to 4, characterized in that the monitoring means can be switched off unconditionally by the operator or by other parts of the system.

6. Tracer system according to one of Claims 1 to 5, characterized in that the tracer system is jointly implemented as a software system in the real-time system, or partially on external system components.

7. Tracer system according to Claim 3 or 4, characterized in that
a) the tracer system is jointly implemented as a software system in the real-time system or partially on external system components, and
b) the monitoring means carries out the deactivation of the tracer system in the event of an overload step-by-step.

## Revendications

1. Système d'impression de parcours pour l'analyse d'erreurs de programmes dans des systèmes fonctionnant en temps réel, comportant
un moyen (SFG) de contrôle, qui détermine la charge dynamique du système en temps réel qui est provoquée par le système d'impression de parcours et qui désactive le système d'impression de parcours, dans le cas où cette charge dynamique dépasse au moins une valeur de seuil déterminée.

2. Système d'impression de parcours suivant la revendication 1,
caractérisé en ce que
le moyen (SFG) de contrôle détermine la charge dynamique du système en temps réel qui est provoquée par le système d'impression de parcours, en mesurant la fréquence des points d'impression de parcours rencontrés ainsi que l'activité moyenne par point d'impression de parcours ou l'activité dans un laps de temps (de mesure) déterminée.

3. Système d'impression de parcours suivant la revendication 1 ou 2,
caractérisé en ce que
a) le moyen (SFG) de contrôle comprend une interface vers une composante du système en temps réel, par exemple un système (UEL) antisurcharge, par l'intermédiaire duquel il reçoit en cas de surcharge une information sur le degré de surcharge existant,
b) le moyen de contrôle désactive le système d'impression de parcours, lorsqu'un degré de surcharge déterminé a été atteint.

4. Système d'impression de parcours suivant la revendication 3,
caractérisé en ce que
le degré de surcharge déterminé peut être modifié par l'utilisateur ou par d'autres parties du système.

5. Système d'impression de parcours suivant l'une des revendications 1 à 4,
caractérisé en ce que
le moyen de contrôle peut être débranché de manière inconditionnelle par l'utilisateur ou par d'autres parties du système.

6. Système d'impression de parcours suivant l'une des revendications 1 à 5,
caractérisé en ce que
le système d'impression de parcours est mis en oeuvre en tant que système logiciel dans le système en temps réel ou partiellement sur des composantes externes du système.

7. Système d'impression de parcours suivant la revendication 3 ou 4,
caractérisé en ce que
a) le système d'impression de parcours est réalisé en tant que système logiciel dans le système en temps réel ou en partie sur des composantes externes du système,
b) le moyen de contrôle procède à la désactivation pas à pas du système d'impression de parcours en cas de surcharge.
